Europäisches Patentamt

European Patent Office

Office européen des brevets

(11) Veröffentlichungsnummer: **0 046 846**
**B1**

# (12) EUROPÄISCHE PATENTSCHRIFT

(45) Veröffentlichungstag der Patentschrift:
17.10.84

(21) Anmeldenummer: 81104459.3

(22) Anmeldetag: 10.06.81

(51) Int. Cl.³: **H 04 L   5/06, H 04 H   1/04**

(54) Kabelkommunikationssystem.

(30) Priorität: 27.08.80 DE 3032294

(43) Veröffentlichungstag der Anmeldung:
10.03.82 Patentblatt 82/10

(45) Bekanntmachung des Hinweises auf die Patenterteilung: 17.10.84 Patentblatt 84/42

(84) Benannte Vertragsstaaten:
AT BE CH DE GB LI NL

(56) Entgegenhaltungen:
DE-A- 2 917 978
DE-B- 2 233 797
FR-A- 2 192 422

(73) Patentinhaber: Remme, Volker
Grevener Strasse 112
D-4400 Münster (DE)

(72) Erfinder: Remme, Volker
Grevener Strasse 112
D-4400 Münster (DE)

(74) Vertreter: Reinhard, Horst, Dr.
Patentanwälte Reinhard, Kreutz & Skuhra Leopoldstrasse 51
D-8000 München 40 (DE)

## Beschreibung

Die Erfindung betrifft ein Kabelkommunikationssystem, bestehend aus wenigstens einer Teilnehmerstation und einer Zentraleinheit, die über ein Koaxialkabel untereinander in Verbindung stehen, bei dem zwischen der Zentraleinheit und jeder Teilnehmerstation eine frequenzmultiplexe und zeitmultiplexe Signalübertragung erfolgt, wobei jede Teilnehmerstation Signalgeber, Modulator und Demodulator sowie Codierer und Decodierer aufweist, ferner die Zentraleinheit Modulator und Demodulator sowie Codierer und Decodierer enthält, und mit Frequenzgeneratoren zur Trägerfrequenzerzeugung.

Ein Kabelkommunikationssystem der eingangs genannten Art ist in der DE-B-2 233 797 (entspricht FR-A-2 192 422) beschrieben. Bei diesem Kabelkommunikationssystem erfolgt eine frequenzmultiplexe und zeitmultiplexe Signalübertragung zwischen der Zentraleinheit und jeder Teilnehmerstation mit Hilfe von Schrittschaltern, welche die einzelnen Teilnehmerstationen nacheinander zur Abfragung abtasten. Über den Schrittschalter wird schrittweise eine Verbindung zwischen jeweils einem Teilnehmer und Zentralmodem hergestellt unter Ermöglichung einer Sprechverbindung und zur Anzeige von Informationssignalen. Eine Kommunikation zwischen den einzelnen Teilnehmerstationen sowie die Informationsübertragung mehrerer Teilnehmerstationen gleichzeitig zur Zentraleinheit ist nicht möglich.

Der Erfindung liegt die Aufgabe zugrunde, ein Kabelkommunikationssystem der eingangs genannten Art zu schaffen, mit dem die Übertragung mehrerer Signale von den Teilnehmerstationen zur Zentraleinheit sowie zwischen den Teilnehmerstationen selbst gleichzeitig möglich ist, wobei die jeweils anstehenden Signale überprüft werden.

Diese Aufgabe wird erfindungsgemäß durch den kennzeichnenden Teil des Anspruchs 1 gelöst.

Weitere Ausgestaltungen des Kabelkommunikationssystems ergeben sich aus den abhängigen Ansprüchen.

Bei dem Kabelkommunikationssystem werden verschiedene Signale auf eine Trägerfrequenz aufmoduliert. Dabei ist die Auswertung und Erfassung aller Signale unabhängig voneinander möglich, wozu die Zentraleinheit eine Funktionsgebereinheit mit Speicher enthält, welcher durch die Rechnersteuerung gesteuert ist. Die einzelnen, anstehenden Signale werden durch eine sequentiell arbeitende Abtasteinrichtung abgetastet und nach Decodierung und Umsetzung zu der Auswertung an eine Auswertelogik gegeben. Die Abtastung der anstehenden Signale erfolgt durch eine einzige Abtasteinrichtung dadurch, daß die gleichzeitig oder nacheinander anstehenden Signale jeweils einer bestimmten Frequenz zugeordnet sind.

Im folgenden wird das Kabelkommunikationssystem anhand der Zeichnung erläutert. Es zeigen :

Figur 1 eine schematische Darstellung der die Abtasteinrichtung bildenden Einheiten des Kabelkommunikationssystems,

Figuren 2a und 2b schematische Darstellungen zur Erläuterung der Abtastoperation entsprechend Fig. 1,

Figur 3 ein gegenüber Fig. 1 ergänztes schematisches Blockschaltbild zur Erläuterung der Signalerzeugung, die über ein Koaxialkabel einer Abtasteinrichtung zugeführt werden,

Figur 4 eine schematische Darstellung des gesamten Kabelkommunikationssystems mit den Einheiten nach Fig. 1 und 3, und

Figur 5 eine Fig. 4 entsprechende schematische Darstellung zur Erläuterung der die zeitmultiplexe Decodierung und Auswertung durchführenden Elemente in dem Kabelkommunikationssystem.

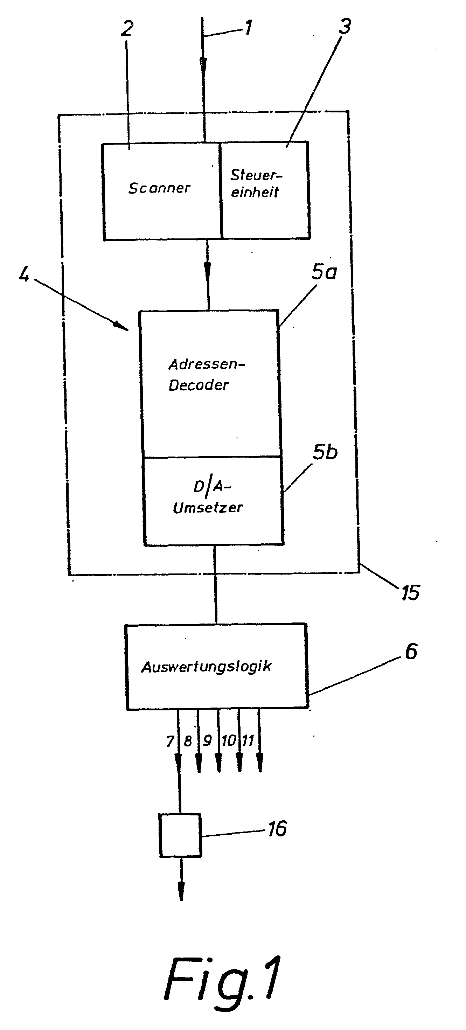

In Fig. 1 ist das Grundschaltbild einer Anordnung zum Abtasten von Eingangssignalen dargestellt. Ein Koaxialkabel ist schematisch mit dem Bezugszeichen 1 angedeutet und bildet den Eingang zu einer Abtasteinrichtung 2, die mit einer internen oder externen Steuereinheit 3 in Verbindung steht. Der Ausgang der Abtasteinrichtung 2 ist mit einer Einheit 4 verbunden, welche einen Adressendecoder 5a und einen Digital/Analog-Umsetzer 5b aufweist. Der Ausgang der Adressendecoder- und Umsetzereinheit 4 ist an eine Auswertungslogik 6 geschaltet, deren Ausgänge 7 bis 11 mit jeweils zugehörigen, im folgenden noch beschriebenen Einrichtungen verbunden sind. Die Zahl der Ausgänge der Auswertungslogik 6 ist beliebig groß.

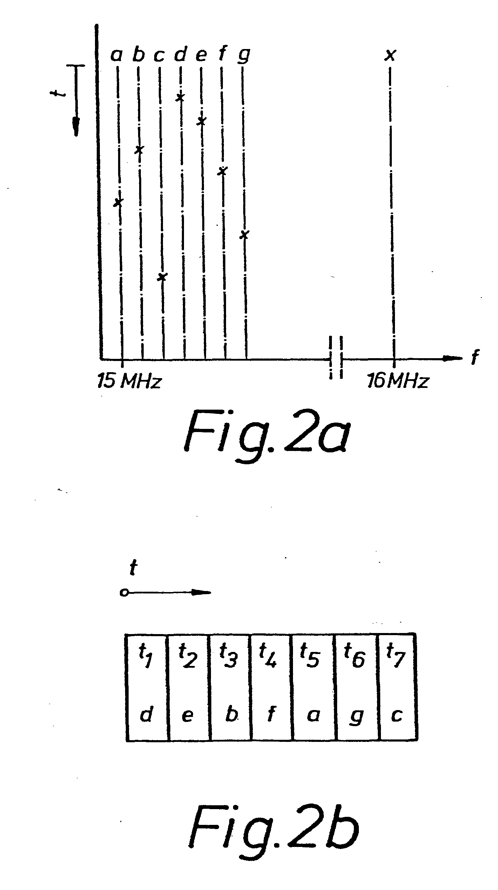

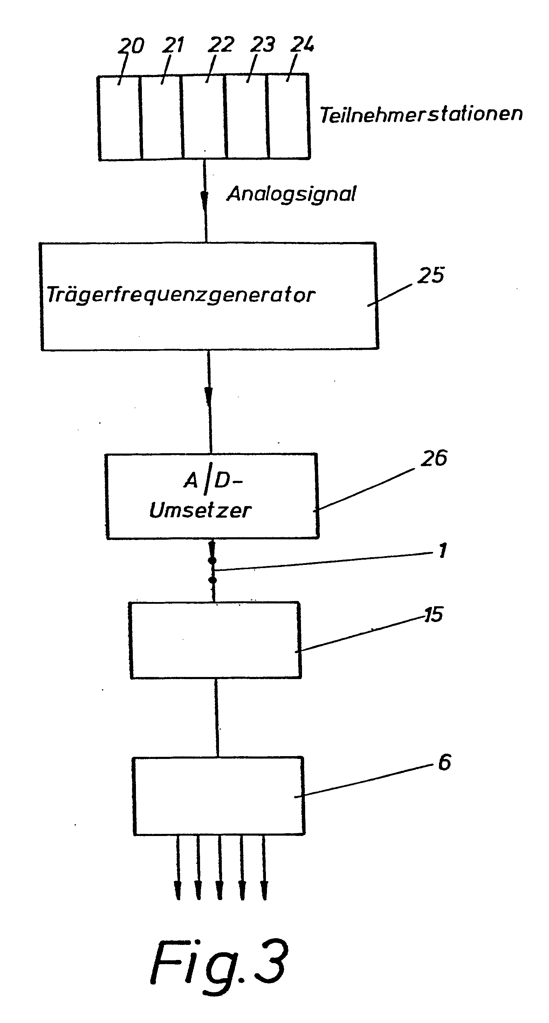

Wie unter Bezugnahme auf Fig. 3 erläutert wird, empfängt die Abtasteinrichtung 2 über die Leitung 1, vorzugsweise ein Koaxialkabel, Digitalsignale, die auf eine vorbestimmte Trägerfrequenz moduliert sind. Damit können der Abtasteinrichtung 2 über eine einzige Koaxialleitung 1 mehrere Signale gleichzeitig zugeführt werden, die auf eine einzige vorbestimmte Trägerfrequenz moduliert sind und jeweils von einem vorbestimmten Teilnehmer erzeugt werden. Diese Signale, nachfolgend als Teilnehmersignale bezeichnet, liegen damit innerhalb eines bestimmten Frequenzspektrums zur Trägerfrequenz. Die der Abtasteinrichtung 2 zugeführten Teilnehmersignale werden einzeln nacheinander abgetastet, wobei die Abtastung frequenzmäßig erfolgt und beispielsweise kein Vorrang des Auftretens der Signale berücksichtigt wird, wie unter Bezugnahme auf Fig. 2 beschrieben wird. Das jeweils abgetastete Signal wird der Adressendecoder- und Umsetzereinheit 4 zugeführt, welche erkennt, von welchem Teilnehmer das jeweils abgetastete Signal herrührt und dieses Signal an die Auswertungslogik 6 anlegt. Die Auswertungslogik 6 wertet jedes Teilnehmersignal hinsichtlich der Art des Befehles aus und erzeugt beispielsweise am Ausgang 7 ein Signal, welches einer Alarmeinrichtung 16 zugeführt wird, wenn der Befehl ein « ALARM » — Befehl ist. Bei einer anderen Art des Befehls steuert die Auswertungslogik 6 über einen der weiteren Ausgänge 8 bis 11 eine Einheit an, die andere Funktion als die Alarmeinrichtung 16 hat.

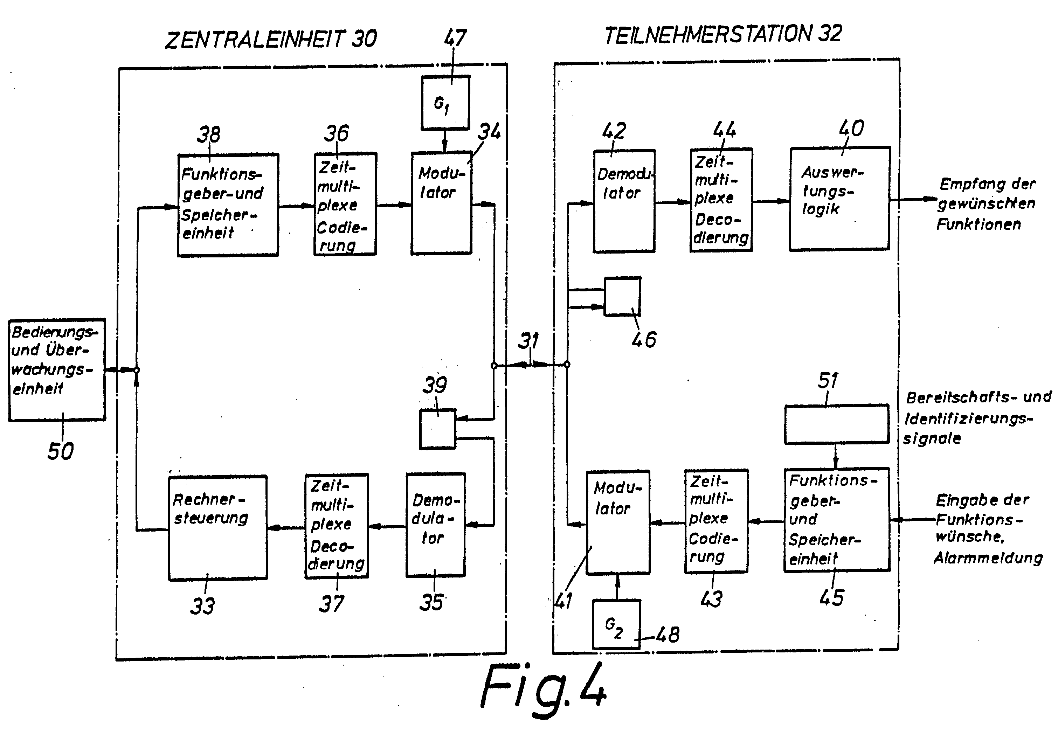

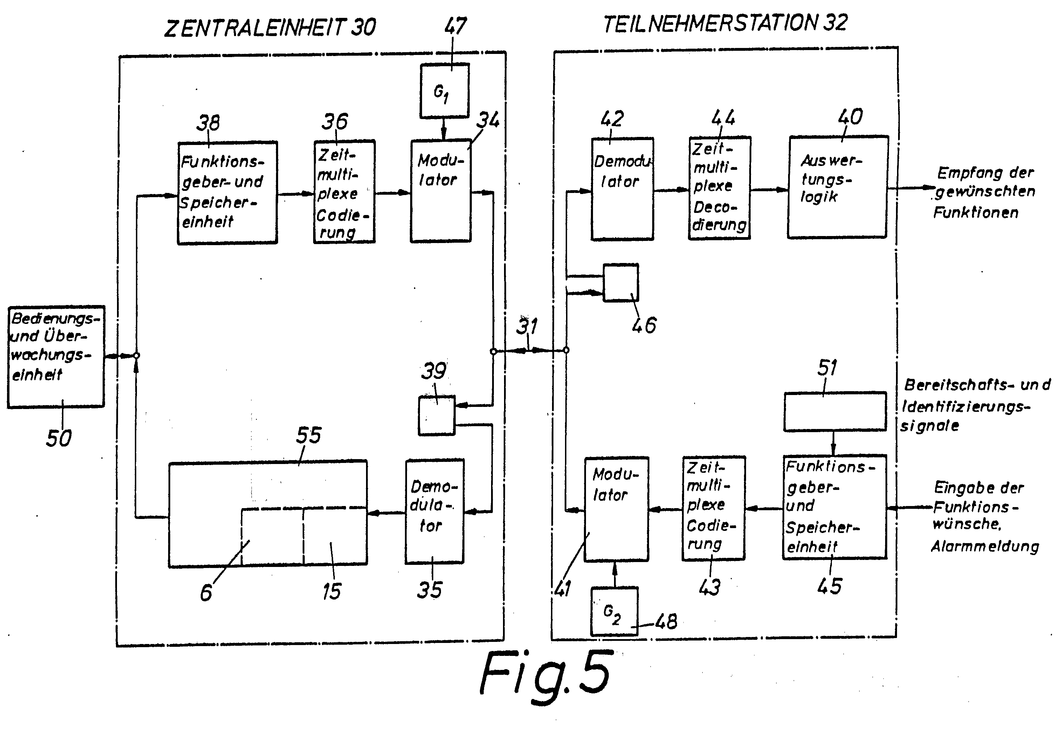

Zusätzlich zu der in Fig. 1 dargestellten Blockschaltung kann ein äquivalenter Rückübertragungsweg vorgesehen sein, welcher demjenigen Teilnehmer die Ausführung eines Befehls meldet, der in dem betreffenden Teilnehmersignal enthalten war. Einzelheiten der Rückübertragung bzw. Rückmeldung oder dergleichen ergeben sich aus der noch folgenden Beschreibung von Fig. 4 und 5.

Die Abtastung der an die Abtasteinrichtung angelegten Teilnehmersignale wird nachfolgend unter Bezugnahme auf Fig. 2a und 2b erläutert. In Fig. 2a sind mehrere Signale a bis g dargestellt, wobei als Beispiel angenommen sei, daß diese Signale a, b usw. in dieser Reihenfolge festgelegt sind. Dies bedeutet, daß bei einem Frequenzabstand von vorzugsweise 10 KHz dem Signal a die Frequenz 15,01 MHz, dem Signal b die Frequenz 15,02 MHz usw. zugeordnet ist, somit also jedem Befehl oder Teilnehmersignal eine bestimmte Frequenz reserviert ist.

Zur Erläuterung der Abtastoperation wird nunmehr angenommen, daß die Abtasteinrichtung zu einem Zeitpunkt $t_1$ angeschaltet wird und die Signale a bis g in der aus Fig. 2a und 2b ersichtlichen Zeitfolge vorliegen, d. h. daß zum Zeitpunkt $t_1$ das Signal d, zum Zeitpunkt $t_2$ das Signal e, usw. auf der Koaxialleitung 1 ansteht. Die Abtastung erfolgt frequenzabhängig, d. h. mit 15,01 MHz, dann folgen 15,02 MHz, 15,03 MHz usw.

Erfindungsgemäß wird somit das vorbestimmte Frequenzspektrum sequentiell abgetastet und es werden nur die Signale erfasst, die bereits anstehen ; damit werden die Signale vorzugsweise unabhängig vom Zeitpunkt ihres Auftretens abgetastet, weshalb nach vorstehender Beschreibung erst ein Signal abgetastet werden kann, welches zu einem Zeitpunkt $t_{x+1}$ ansteht, bevor ein Signal abgetastet wird, das bereits zum Zeitpunkt $t_x$ vorlag : Das Signal g wird vor dem Signal b abgetastet. Die Signale a, b, ... werden damit jeweils einzeln abgetastet und nach Abtastung zur Einheit 4 und der Auswertungslogik 6 übertragen. Bei einem Frequenzabstand von 10 KHz können im Frequenzband von 15 bis 16 MHz insgesamt 100 Signale erfasst werden, wobei vorzugsweise jedem Teilnehmersignal eine einzige vorbestimmte Frequenz zugeordnet ist und die Auswertungslogik unter verschiedenen Befehlen (Funktionsbefehlen, wie z. B. Alarm oder dergleichen) differenziert.

Nach einer Abwandlung ist es möglich, daß jedem Teilnehmer mehrere Frequenzen entsprechend Fig. 2a zugeordnet sind, d. h. für jeden möglichen Befehl eine Frequenz. Diese Abwandlung wird nur bei einer geringen Teilnehmerzahl und einer kleinen Zahl unterschiedlicher Befehle je Teilnehmer eingesetzt. Hierbei werden die jeweils abgetasteten Signale ebenfalls über den Adressendecoder 5 der Auswertungslogik 6 zugeführt. Es wird allerdings diejenige Ausführungsform bevorzugt, bei welcher jedem Teilnehmer eine einzige Frequenz zugeordnet ist und die Auswertung der Befehlsart von der Auswertungslogik übernommen wird.

Die vorstehend angegebenen Frequenzbereiche entsprechend Fig. 2a und der Signalabstand von 10 KHz sind nur als Beispiel angenommen und können ohne weiteres geändert werden. Der Signalabstand kann z. B. auch kleiner als 10 KHz sein.

Der Einsatz der Abtasteinrichtung 2 hat somit zum Ziel, die an der Abtasteinrichtung 2 von dem Koaxialkabel 1 her anstehenden Signale a usw. zugeordneter Teilnehmer nacheinander der Auswertungslogik 6 in einem sequentiellen Betrieb zuzuführen. Diese Betriebsart stellt sicher, daß bei einer Vielzahl von Teilnehmersignalen nur eine einzige Auswertungslogik 6 benötigt wird. Würde dagegen die Abtasteinrichtung 2 weggelassen werden, wäre pro Teilnehmersignal ein Umsetzer 5 und eine Auswertungslogik 6 erforderlich.

Die einzelnen Teilnehmerstationen sind in Fig. 3 durch die Bezugszeichen 20 bis 24 angedeutet, wobei vorausgesetzt wird, daß jede Teilnehmerstation einen eigenen Funktionsgeber beinhaltet, welcher die zur Abtasteinrichtung 1 zu übertragenden Signale erzeugt. Jede Teilnehmerstation 20 bis 24 gibt über den ihr zugeordneten Funktionsgeber ein Analogsignal ab, welches, wie nachfolgend unter Bezugnahme auf Fig. 4 noch erläutert wird, einer von einem Trägerfrequenzgenerator 25 erzeugten Trägerfrequenz überlagert wird und anschließend einer Analog/Digital-Umsetzung im Analog/Digital-Umsetzer 26 unterworfen wird, bevor es an die mit 15 bezeichnete Einheit geleitet wird. Die Einheit 15 umfaßt die Blöcke 2 bis 5 gemäß Fig. 1. Damit ist erkennbar, daß gleichzeitig oder auch aufeinanderfolgend mehrere, jeweils einer Teilnehmerstation 20 bis 24 zugeordnete Frequenzsignale in dem als Beispiel unter Bezugnahme auf Fig. 2a beschriebenen Frequenzband erzeugt werden können, die über die Koaxialleitung 1 zur Abtasteinrichtung 2 geführt und dort einzeln abgetastet werden.

Einzelheiten der Steuerung 3 für die Abtasteinrichtung 2 brauchen nicht erläutert zu werden, da die Steuerung 3 nicht erfindungswesentlich ist und als solche bekannt ist.

Die Abtasteinrichtung 2 ist in dem in Fig. 4 und 5 dargestellten Kabelkommunikationssystem vorgesehen. Fig. 4 zeigt das Grundschaltbild eines derartigen Kabelkommunikationssystems, dessen Grundprinzipien darauf beruhen, daß eine Zentraleinheit 30 über ein Koaxialkabel 31 mit einer oder mehreren Teilnehmerstationen 32 verbunden ist. Die Zentraleinheit 30 enthält eine Rechnersteuerung 33, einen Modulator 34, einen Demodulator 35, eine zeitmultiplexe Codierschaltung 36 und eine Decodierschaltung 37 sowie eine Funktionsgeber- und Speichereinheit 38 und ein Filter 39. Die Rechnersteuerung 11 empfängt die Anforderungen (Befehlssignale) der Teilnehmerstationen 3 über das Filter 39, den Demodulator 35 und den Decodierer 37. Die Herstellung einer bzw. mehrerer Verbindungen zwischen der Rechnersteuerung 33 und einer Teilnehmerstation bzw. mehrere Teilnehmerstationen 32 erfolgt über den Codierer 36 und den Modulator 34.

Jede Teilnehmerstation 32 weist entsprechend eine Auswertungslogik 40, einen Modulator 41, einen Demodulator 42, eine zeitmultiplexe Codier- und Decodierschaltung 43 und 44, eine Funktionsgeber- und Speichereinheit 45 und ein Filter 46 auf. Die Auswertungslogik 40 steht über die Funktionsgeber- und Speichereinheit 45 mit dem Modulator 41 und dem Codierer 43 im Verbindung. Der Modulator 34 ist gemäß Fig. 4 mit einem Frequenzgenerator 47 und der Modulator 41 ist mit einem Frequenzgenerator 48 verbunden, wodurch jeder Modulator 34 bzw. 41 die betreffenden Signale auf die durch den Trägerfrequenzgenerator 47 oder 48 bestimmte Trägerfrequenz aufmodulieren.

Ferner kann die Zentraleinheit 30 mit einer Bedienungs- und Überwachungseinheit 50 verbunden zein und jede Teilnehmerstation 32 eine Einheit 51 zur Erzeugung von Bereitschafts- und Identifizierungssignalen aufweisen.

Fig. 5 zeigt die Rechnersteuerung 33 und die zeitmultiplexe Decodierung 37 als eine Einheit 55. Die Einheit 55 einthält also die zeitmultiplexe Decodierung 37 nach Fig. 4, den Block 15 nach Fig. 1 und die Auswertungslogik 6, die in der Einheit 55 gestrichelt angedeutet sind.

Da die Zentraleinheit 30 pro Teilnehmerstation mehrere Signale empfangen kann, ist ersichtlich, daß durch den Einsatz der erfindungsgemäßen Anordnung eine wesentliche Einsparung von Bauteilen durch die Verwendung einer einzigen Auswertungslogik 6 erreicht wird, indem die Abtastung der über das Koaxialkabel 31 übertragenen frequenzmodulierten Signale sequentiell ausgeführt wird.

Aus Fig. 4 und 5 ist erkennbar, daß die in Fig. 1 dargestellte Anordnung ohne weiteres auch in einzelnen oder in jeder Teilnehmerstation 32 einsetzbar ist, wenn beispielsweise eine vorbestimmte Teilnehmerstation zum Empfang unterschiedlicher Signale anderer Teilnehmerstationen und zur Ausführung bestimmter Befehle konzipiert ist. In diesem Fall wird die Auswertungslogik 40 durch die in Fig. 1 dargestellte Anordung ersetzt sein.

Unter Bezugnahme auf Fig. 1 wurde erläutert, daß die Auswertungslogik 6 unter anderem beispielsweise an eine Alarmeinrichtung 16 geschaltet sein kann. In Verbindung mit dieser Alarmeinrichtung 16 soll die Arbeitsweise der Anordnung nach Fig. 1 im einzelnen erläutert werden. Wie bereits vorstehend beschrieben ist, ist die erfindungsgemäße Anordnung, auch in Verbindung mit dem in Fig. 5 beschriebenen System, derart funktionsfähig, daß jede Teilnehmerstation Signale erzeugen kann, die einer Trägerfrequenz aufmoduliert, über die Koaxialleitung übertragen und der Abtasteinrichtung zur folgenden Auswertung durch die Auswertungslogik 6 zugeführt werden.

Vorzugsweise werden die Signale aller Teilnehmer einer einzigen Trägerfrequenz aufmoduliert, wozu allen Teilnehmern 32 ein gemeinsamer Trägerfrequenzgenerator zugeordnet ist. Das von einem Teilnehmer erzeugte Signal für eine vorbestimmte Funktion (Befehl) kann dabei drei verschiedene Zustände aufweisen, deren Auswertung in den Auswertungslogik erfolgt : Ein erster Zustand entspricht einem Signal mit einer ersten Modulation, welches beispielsweise gleichbedeutend ist für einen Alarm, so daß am Ausgang 7 der Auswertungslogik 6 ein Signal erzeugt und der Einheit 16 zugeführt wird. Eine zweite Modulation zeigt die Betriebsbereitschaft der betreffenden Teilnehmerstation an, während eine dritte Modulation einer Leistungsunterbrechung auf der Seite der betreffenden Teilnehmerstation 32 entspricht. Diese drei Signale einer Teilnehmerstation 32 entsprechen drei der Signale a, b, c usw. nach Fig. 2a und 2b, die dem Trägerfrequenzgenerator 48 zur Modulation auf die gemeinsame Trägerfrequenz zugeführt werden.

Die einzelnen Signale haben entsprechend Fig. 2a einen Frequenzhub von $\pm 1,5$ KHz. Zur Übertragung von Signalen von der Zentraleinheit zu allen Teilnehmern ist hierbei der weitere Trägerfrequenzgenerator 47 vorgesehen, d. h. das System enthält insgesamt wenigstens zwei Trägerfrequenzgeneratoren.

Es ist möglich, für jeden Funktionsgeber 45, d. h. jede Teilnehmerstation 32 einen eigenen Trägerfrequenzgenerator 48 vorzusehen, so daß jeder Teilnehmerstation eine eigene Trägerfrequenz zugeordnet ist.

Zur Übertragung von Signalen von der Zentraleinheit 30 zu einer der Teilnehmerstationen wird hierbei die Trägerfrequenz des Trägerfrequenzgenerators 47 benützt, während zur Übertragung von Signalen von den Teilnehmerstationen zur Zentraleinheit jeweils eine eigene Trägerfrequenz benützt wird und die Trägerfrequenzen der einzelnen Teilnehmer-Trägerfrequenzgeneratoren unterschiedlich gewählt sind.

Dieses Prinzip wird bevorzugt, wenn verschiedene Funktionen in der Auswertungslogik 6 ausgewertet werden sollen und dabei die Trägerfrequenz selbst berücksichtigt wird. Bei diesem Ausführungsbeispiel können die drei folgenden, unterschiedlichen Signalzustände je Befehl bzw. Funktion vorliegen :

a) Trägerfrequenzmoduliertes Signal als Alarmsignal : Ausgangssignal bei 7 und Aktivierung der Alarmeinheit,

b) Trägerfrequenz ohne Modulation bedeutet Funktionsgeber ist angeschlossen,

c) Trägerfrequenz fehlt : bedeutet z. B. Verbindung zum Funktionsgeber unterbrochen und führt zu einem Alarm oder einer Anzeige für Leitungsunterbrechung.

Die Ausführung eines bestimmten Befehls, beispielsweise eine Alarmerzeugung infolge der Abgabe eines Signals am Ausgang 7 zur Einheit 16 kann bei vorliegender Erfindung ebenfalls erfolgen, zu welchem Zweck über die Auswertungslogik 6 und/oder die Einheit 16 ein entsprechendes, in den Figuren nicht dargestelltes Signal abgegeben wird, das bei dem Kabelkommunikationssystem nach Fig. 4 oder 5 ein entsprechendes Ausgangssignal der Einheit 38 bewirkt und demjenigen Teilnehmer 32 zugeführt wird, der den betreffenden Befehl ausgeführt hat. Auf diese Weise kann dann bei dem betreffenden Teilnehmer 32 eine Bestätigung der Ausführung des Befehles oder ein Löschen der betreffenden Funktion erfolgen.

## Ansprüche

1. Kabelkommunikationssystem, bestehend aus wenigstens einer Teilnehmerstation (32) und einer Zentraleinheit (30), die über ein Koaxialkabel (1 ; 31) untereinander in Verbindung stehen, bei dem zwischen der Zentraleinheit (30) und jeder Teilnehmerstation (32) eine frequenzmultiplexe und zeitmultiplexe Signalübertragung erfolgt, wobei jede Teilnehmerstation (32) Signalgeber (48, 51), Modulator (41) und Demodulator (42) sowie Codierer (43) und Decodierer (44) aufweist, ferner die Zentraleinheit (30) Modulator (34) und Demodulator (35) sowie Codierer (36) und Decodierer (37) enthätl, und mit Frequenzgeneratoren (47) zur Trägerfrequenzerzeugung, dadurch gekennzeichnet, daß die Zentraleinheit (30) eine für die Teilnehnerstationen (32) zuständige Rechnersteuerung (55) aufweist, daß die Rechnersteuerung (55) eine Auswertelogik (6) enthält, wobei jede Teilnehmerstation (32) eine Funktionsgebereinheit (45) mit Speicher enthält, daß die Rechnersteuerung (55) eine in der Zentraleinheit (30) vorgesehen Funktionsgebereinheit (38) mit Speicher steuert, daß die Rechnersteuerung (55) eine sequentiell arbeitenden Abtasteinrichtung (15) aufweist, und daß die Abtasteinrichtung (15) über einen Decoder (4) und einen Umsetzer (5) an die Auswertelogik (6) angeschlossen ist.

2. Kabelkommunikationssystem nach Anspruch 1, dadurch gekennzeichnet, daß mehrere Funktionseinheiten (16) an die Auswertelogik (6) angeschlossen sind.

3. Kabelkommunikationssystem nach Anspruch 1 oder 2, dadurch gekennzeichnet, daß die von den Teilnehmerstationen (20 bis 24 ; 32) erzeugten Signale in Form von Digitalsignalen, die auf die Trägerfrequenz aufmoduliert sind, an der Abtasteinrichtung (5) anstehen.

4. Kabelkommunikationssystem nach Anspruch 3, dadurch gekennzeichnet, daß jede Teilnehmerstation (20 bis 24 ; 32) einen eigenen Trägerfrequenzgenerator (48) aufweist.

## Claims

1. Cable communications system consisting of at least one subscriber station (32) and an exchange unit (30) which communicate with each other via a coaxial cable (1 ; 31) wherein a frequency-multiplex and time-multiplex signal transmission occurs between the exchange unit (30) and each subscriber station (32), each subscriber station (32) having signal transmitters (48, 51) modulators (41) and demodulators (42) as well as coders (43) and decoders (44), the exchange unit (30) also comprising modulators (34) and demodulators (35) as well as coders (36) and decoders (37), and having frequency generators (47) for the generation of carrier frequencies, characterised in that the exchange unit (30) has the appropriate computer control means (55) for the subscriber stations (32), and in that the computer control means (55) has a scoring logic (6), each subscriber station (32) containing a function generator (45) with a memory, and in that the computer control means (55) controls a function generator (38) and memory provided in the exchange unit (30), and in that the computer control means (55) has a sequentially operating scanning device (15) and in that the scanning device (15) is connected via a decoder (4) and a converter (5) to the scoring logic (6).

2. Cable communications system according to Claim 1, characterised in that a plurality of function units (16) are connected to the scoring logic (6).

3. Cable communications system according to Claim 1 or 2, characterised in that the signals generated by the subscriber stations (20 to 24 ; 32) are present at the scanning means (15) in the form of digital signals which are modulated up to the carrier frequency.

4. Cable communications system according to Claim 3, characterised in that each subscriber station (20 to 24 ; 32) has its own carrier frequency generator (48).

## Revendications

1. Système de communication par câble constitué par au moins un poste d'abonné (32) et une unité centrale (30), qui sont en communication l'un avec l'autre par l'intermédiaire d'un câble coaxial (1 ; 31), dans lequel s'effectue entre l'unité centrale (30) et chaque poste d'abonné (32) une transmission de signaux multiplexée en fréquence et multiplexée dans le temps, chaque poste d'abonné (32) comprenant un générateur de signaux (48, 51), un modulateur (41) et un démodulateur (42) ainsi qu'un codeur (43) et un décodeur (44), l'unité centrale (30) comprenant en outre un modulateur (34) et un démodulateur (35) ainsi qu'un codeur (36) et un décodeur (37), et comprenant des générateurs de fréquence (47) en vue de la production de la fréquence porteuse, caractérisé en ce que l'unité centrale (30) comprend une commande de calculateur (55) associée aux postes d'abonnés (32), en ce que la commande de calcul (55) contient une logique d'évaluation (6), chaque poste d'abonné (32) contenant un émetteur de fonction à mémoire (45), en ce que la commande de calcul (55) commande un émetteur de fonction à mémoire (38) prévu dans l'unité centrale (30), en ce que la commande de calcul (55) comprend un dispositif explorateur (15) fonctionnant de façon séquentielle, et en ce que le dispositif explorateur (15) est raccordé à la logique d'évaluation (6) par l'intermédiaire d'un décodeur (4) et d'un convertisseur (5).

2. Système de communication par câble selon la revendication 1, caractérisé en ce que plusieurs unités fonctionnelles (16) sont raccordées à la logique d'évaluation (6).

3. Système de communication par câble selon la revendication 1 ou 2, caractérisé en ce que les signaux produits par les postes d'abonnés (20, 24 ; 32) sont appliqués au dispositif explorateur (15) sous forme de signaux numériques modulés sur la fréquence porteuse.

4. Système de communication par câble selon la revendication 3, caractérisé en ce que chaque poste d'abonné (20 à 24 ; 32) comprend un générateur de fréquence porteuse propre (48).

Fig.1

Fig.2a

Fig.2b

20  21  22  23  24

Teilnehmerstationen

Analogsignal

Trägerfrequenzgenerator                25

A/D–
Umsetzer                               26

1

15

6

# Fig.3

3

ZENTRALEINHEIT 30    47    TEILNEHMERSTATION 32

G₁  *(47)*

38 — Funktionsgeber-und Speichereinheit

36 — Zeitmultiplexe Codierung

34 — Modulator

42 — Demodulator

44 — Zeitmultiplexe Decodierung

40 — Auswertungslogik

Empfang der gewünschten Funktionen

46

50 — Bedienungs- und Überwachungseinheit

31

39

51

Bereitschafts- und Identifizierungssignale

33 — Rechnersteuerung

37 — Zeitmultiplexe Decodierung

35 — Demodulator

41 — Modulator

43 — Zeitmultiplexe Codierung

45 — Funktionsgeber- und Speichereinheit

Eingabe der Funktionswünsche, Alarmmeldung

G₂ — 48

Fig.4

ZENTRALEINHEIT 30   47   TEILNEHMERSTATION 32

Fig.5